# FASCICULE DE BREVET EUROPEEN

(11) **EP 1 467 950 B1**
(45) Date de publication et mention de la délivrance du brevet: **27.04.2005**
(21) Numéro de dépôt: 03715018.2
(22) Date de dépôt: 17.01.2003
(51) Int. Cl.: C01F 7/06, C01F 7/47

(54) **SOLUBILISATION DES CARBONATES PAR RECYCLAGE DES CONDENSATS LORS DE L ATTAQUE SOUS PRESSION DES BAUXITES A MONOHYDRATES**
SOLUBILISIERUNG VON CARBONATEN DURCH REZYKLIERUNG VON KONDENSATEN BEIM DRUCKAUFSCHLUSS VON MONOHYDRAT-BAUXITEN
SOLUBILISATION OF CARBONATES BY RECYCLING CONDENSATES ON DIGESTION UNDER PRESSURE OF MONOHYDRATE BAUXITES

(30) Priorité: 21.01.2002 FR 0200717
(43) Date de publication de la demande: 20.10.2004
(73) Titulaire: Aluminium Pechiney, 75016 Paris (FR)
(72) Inventeur: KERAMIDAS, Odissefs, F-13100 Aix en Provence (FR); LAMERANT, Jean-Michel, F-13320 Bouc-Bel-Air (FR); ROUMIEU, Raymond, 52, av. des Ecoles Militaires, F-13100 Aix en Provence (FR)
(74) Mandataire: Fénot, Dominique
(86) Numéro de dépôt international: PCT/FR2003/000139
(87) Numéro de publication internationale: WO 2003/062147

## Description

### DOMAINE TECHNIQUE

L'invention concerne un procédé de production d'alumine selon le procédé Bayer à partir de bauxites à monohydrate d'alumine de type diaspore ou boehmite qui, telles les bauxites de Grèce et de Chine, sont susceptibles de contenir plus de 1,5% en poids de carbonates de calcium.

### ETAT DE LA TECHNIQUE

Le procédé Bayer constitue la technique essentielle de production de l'alumine destinée à être transformée en aluminium par électrolyse ignée (alumine dite "métallurgique"). Il permet également de fabriquer une grande partie des alumines destinées à l'élaboration de matériaux réfractaires, de céramiques, de media de broyage, de charges ignifugeantes, de bétons, etc... (alumines dites "techniques"). Selon ce procédé, le minerai de bauxite est traité à chaud au moyen d'une solution aqueuse d'hydroxyde de sodium, à concentration appropriée, provoquant ainsi la solubilisation de l'alumine et l'obtention d'une liqueur sursaturée d'aluminate de sodium.

Pour dissoudre l'alumine contenue dans des bauxites à monohydrate, il est nécessaire de porter la liqueur à une température assez élevée, supérieure à 220°C, pouvant atteindre 250°C à 270°C. L'attaque du minerai doit s'effectuer dans des autoclaves aptes à supporter de fortes pressions, typiquement plusieurs dizaines de bars. Après séparation de la phase solide constituant le résidu inattaqué (boues rouges) du minerai, la liqueur sursaturée d'aluminate de sodium est décomposée par ensemencement avec des particules de trihydroxyde d'aluminium dans le but de provoquer la précipitation de l'alumine en solution, sous forme de trihydroxyde d'aluminium. La liqueur d'aluminate de sodium, appauvrie en alumine après la décomposition, est alors recyclée vers l'étape de l'attaque de la bauxite après avoir été reconcentrée à une teneur en hydroxyde de sodium appropriée (ajout d'hydroxyde et/ou évaporation).

Le procédé Bayer étant cyclique, toute impureté issue de la bauxite et introduite dans la liqueur lors de l' attaque du minerai risque de s'accumuler si elle n'est pas éliminée périodiquement. C'est le cas notamment du carbonate de sodium en solution dans la liqueur Bayer dont la proportion pondérale exprimée par le rapport (Na₂O carbonatée) / (Na₂O caustique + Na₂O carbonatée) doit rester en général voisin de 10% (Na₂O caustique étant Na₂O libre + Na₂O sous forme d'aluminate AlO₂Na en solution). Au-delà d'un seuil voisin de 14%, le carbonate de sodium peut précipiter de façon intempestive et perturber le fonctionnement des installations. C'est en particulier le cas au niveau des détendeurs de l'installation d'attaque à chaud et sous pression des bauxites riches en monohydrate d'alumine.

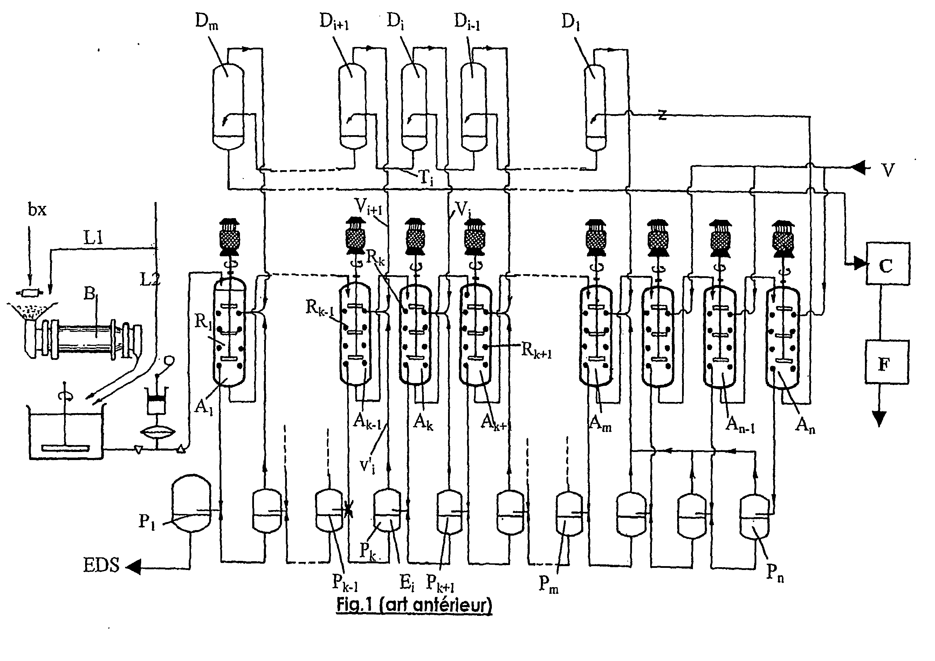

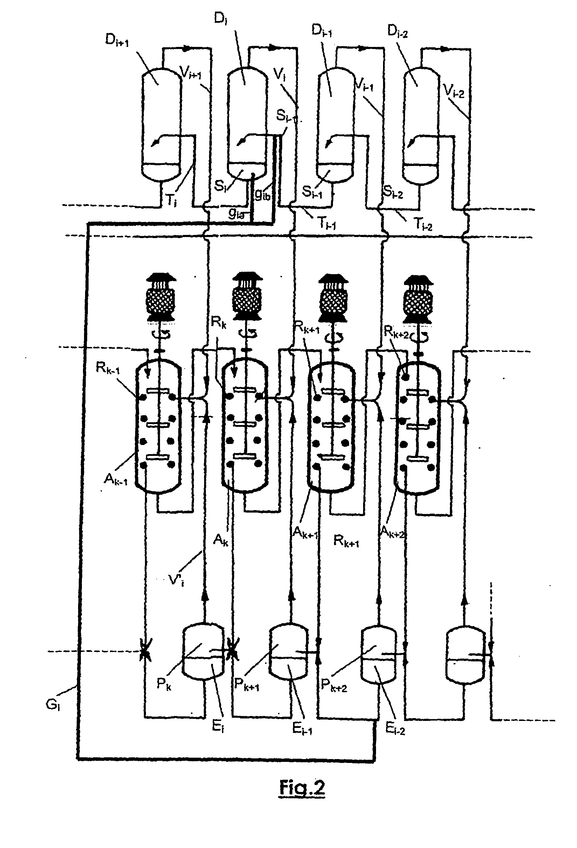

La figure 1 représente une partie de l'installation d'un circuit Bayer de l'art antérieur, correspondant à un atelier d'attaque continue des bauxites à monohydrates d'alumine: la bauxite (bx) , broyée (broyeur B) en présence d'une aliquote (L1) de la liqueur d'attaque constitue une pâte qui est mélangée avec le reste de la liqueur d'attaque (L2). La suspension résultant du mélange traverse, à l'aide de moyens de pompage puissants, une série de n autoclaves (A₁, ..., Aₖ₋₁, Aₖ, Aₖ₊₁, ..., Aₙ) agités mécaniquement puis une série de m détendeurs (D₁ ..., Dᵢ₋₁, Dᵢ, Dᵢ₊₁, ..., Dₘ) - m étant inférieur à n - avant d'atteindre le poste de dilution (C) puis celui de décantation à pression atmosphérique (F).

En traversant chaque autoclave Aₖ, la suspension circule à proximité d'un réchauffeur tubulaire (Rₖ) qui traverse l'autoclave (Aₖ). Les réchauffeurs tubulaires sont, pour les m premiers (R₁, ..., Rₖ₋₁, Rₖ, Rₖ₊₁, ..., Rₘ), alimentés par de la vapeur récupérée issue des détendeurs (Dₘ, ..., Dᵢ₊₁, Dᵢ, Dᵢ₋₁, ..., D₁), et pour les (m-n) suivants (Rₘ₊₁, ..., Rₙ) par de la vapeur vive (V) provenant de la chaufferie. La température atteinte par la suspension à la sortie de chaque autoclave (Aₖ) est fixée à l'avance et contrôlée en agissant sur la quantité de vapeur (Vᵢ) issue d'un détendeur (Dᵢ) et traversant le réchauffeur (Rₖ). A chaque détendeur est associé un état par lequel passe la suspension, caractérisé par un niveau moyen de pression et un domaine de température relativement stables dans le temps. Les installations industrielles comportent un nombre n d'autoclaves et m de détendeurs variables. Il y a plusieurs dizaines d'années, n était typiquement voisin de 10 et m voisin de 7; à l'heure actuelle n est plutôt voisin de 20 et m voisin de 12.

La durée du parcours de la suspension est telle qu'à la sortie du dernier autoclave (Aₙ), où la température est voisine de 260°C, l'attaque du minerai est achevée, c'est-à-dire que la majeure partie de l'alumine contenue dans la bauxite est dissoute dans la liqueur d'aluminate. La suspension est ensuite dirigée vers une série de détendeurs (D₁, ..., Dᵢ₋₁, Dᵢ, Dᵢ₊₁, ..., Dₘ), chacun de ces détendeurs Dᵢ libérant de la vapeur Vᵢ alimentant un réchauffeur Rₖ décrit précédemment. A la sortie du dernier détendeur (Dₘ), la suspension est amenée vers un poste (C) où elle est diluée avant d'être conduite vers les bacs de décantation (F) pour la séparation des résidus insolubles. L'eau de condensation de la vapeur (Vi) issue du détendeur (Dᵢ) qui traverse le réchauffeur (Rₖ) pour chauffer la suspension dans l'autoclave (Aₖ) est recueillie dans un pot de purge (Pₖ). La vapeur non condensée (V'ᵢ) est reliée à l'alimentation en vapeur (Vᵢ₊₁) du réchauffeur (Rₖ₋₁) et le condensat (Ei), contenu dans le pot de purge (Pₖ) est conduit vers le pot de purge (Pₖ₋₁). L'eau sortant du pot de purge (P₁), appelée eau de distillation sodique (EDS) est utilisée comme eau industrielle, en particulier pour le lavage des résidus insolubles extraits par décantation dans l'atelier suivant (F).

Les bauxites à monohydrate de type diaspore ou boehmite rencontrées fréquemment en Grèce ou en Chine sont particulièrement riches en carbonate de calcium (CaCO₃ > 1.5%). Au cours de l'attaque, on constate un accroissement important du taux de carbonate de sodium par suite de l'apport d'ions CO₃²⁻. libérés lors de la dissociation de CaCO₃. Ce taux de carbonates dans l'aluminate est généralement encore plus élevé que le taux dû au seul apport en carbonates de la bauxite car on ajoute de la chaux pour améliorer le rendement de l'attaque, et la chaux utilisée comporte elle-même, souvent pour des raisons économiques d'approvisionnement, une certaine quantité de particules de carbonate de calcium.

Si donc la proportion pondérale exprimée par le rapport (Na2O carbonatée) / (Na2O caustique + Na2O carbonatée) dépasse un seuil voisin de 14% - ce seuil est fonction notamment de la température de la liqueur et de sa concentration en Na2O caustique - , le carbonate de sodium peut précipiter de façon intempestive et perturber le fonctionnement des installations. Le problème se présente de façon particulièrement sensible au niveau des détendeurs, notamment en se manifestant par un entartrage massif à l'entrée d'un ou plusieurs des conduits (Tᵢ) par lesquels la suspension passe d'un détendeur (Dᵢ) au suivant (Dᵢ₊₁). Il faut dans ce cas arrêter la série pour effectuer un nettoyage des circuits colmatés. Une telle opération est en soi longue, délicate et coûteuse. D'autre part, elle bloque la production, ce qui diminue sensiblement le rendement économique de la chaîne BAYER.

FR 1 523 304 (PECHINEY et KESTNER) préconise pour les bauxites à teneur élevée en carbonate de calcium, un procédé consistant à sursaturer en carbonate de sodium une fraction de la liqueur d'aluminate appauvrie, prélevée juste après sa décomposition et traitée dans un atelier particulier comprenant une chaîne d'évaporateurs et une chaîne de détendeurs, de telle sorte qu'une cristallisation de carbonate de sodium s'effectue avec apparition de grains grossiers faciles à séparer de la liqueur d'aluminate. Celui-ci est ensuite extrait puis caustifié par de la chaux après redissolution. Ce procédé de décarbonatation est malheureusement très coûteux en investissement et en énergie vapeur.

Dans la demande française FR 2 328 660, la demanderesse a proposé un procédé également adapté au traitement des bauxites à forte teneur en carbonate en calcium (CaCO3 >1.5%) telles que les bauxites à diaspore de Grèce ou de Chine. Ce procédé consiste à piéger les ions carbonates par précipitation de carbonate de baryum dans une fraction de la liqueur appauvrie. Le carbonate de baryum est ensuite calciné en présence de trihydroxyde d'aluminium AI(OH)3 pour régénérer l'aluminate de baryum qui est recyclé. Ce procédé performant dans l'élimination des carbonates a néanmoins trois inconvénients:
- il est gros consommateur d'énergie: de l'ordre de 20 kg de fuel à basse teneur en soufre par tonne d'alumine
- il entraîne un manque à produire important correspondant au trihydrate d'aluminium qui doit être affecté en permanence à la boucle de régénération de l'aluminate de baryum et dont la quantité est fonction de la teneur en carbonate de calcium de la bauxite.
- les sels de baryum posent des problème d'environnement et d'hygiène difficiles à résoudre.

Enfin, un autre procédé a été proposé par PECHINEY et la SOCIETE DES BAUXITES DU PARNASSE pour les bauxites à diaspore grecques. Ce procédé consiste à broyer la bauxite puis à séparer par flottation et éliminer partiellement les carbonates avant d'injecter ladite bauxite dans le circuit Bayer. (voir par exemple l'article paru dans TMS 99: "Alumina Production From Diasporic Bauxite" par E.Lavalou, O.Keramidas et B.Bosca). Un tel procédé, dit de "décalcitation", est efficace mais nécessite l'installation d'un gros atelier annexe en amont des installations Bayer. L'amortissement financier d'une telle installation grève le coût de fabrication de l'alumine à partir de ce type de bauxites.

### PROBLEME POSE

La demanderesse a cherché à mettre au point un procédé de production d'alumine selon le procédé Bayer à partir de bauxites à monohydrate d'alumine de types diaspore ou boehmite, lesdites bauxites étant susceptibles de contenir plus de 1,5% en poids de carbonates de calcium. Ce procédé ne doit pas présenter les inconvénients économiques ou environnementaux exposés ci-dessus.

### OBJET DE L'INVENTION

L'objet de l'invention est un procédé de production d'alumine à partir de bauxites à monohydrate d'alumine de type diaspore ou boehmite susceptibles de contenir plus de 1,5% en poids de carbonate de calcium présentant les étapes générales d'un procédé Bayer suivantes:
a) attaque du minerai à une température supérieure à 220°C à l'aide d'une liqueur d'aluminate ayant une concentration en soude supérieure à 200 g Na20 /litre;
b) dilution de la suspension d'aluminate ainsi obtenue,
c) séparation des résidus insolubles par décantation et filtrage,
d) décomposition de la liqueur par ensemencement avec des particules de trihydroxyde d'aluminium dans le but de provoquer la précipitation de l'alumine en solution, sous forme de trihydrate d'alumine;
e) recyclage de la liqueur d'aluminate de sodium appauvrie vers l'étape de l'attaque de la bauxite après lui avoir redonné une concentration en hydroxyde de sodium appropriée,
l'étape d'attaque du minerai étant effectuée de la façon suivante:
a1) une suspension, réalisée avec le minerai de bauxite broyé et la liqueur d'aluminate concentrée, est conduite dans une installation comportant une série de n autoclaves (A₁, ..., Aₖ₋₁, Aₖ, Aₖ₊₁, ..., Aₙ) et une série de m, m étant inférieur à n, détendeurs (D₁ ..., Dᵢ₋₁, Dᵢ, Dᵢ₊₁, ..., Dₘ) alimentant en vapeur m réchauffeurs tubulaires (Rₘ, ..., Rₖ₊₁, Rₖ, Rₖ₋₁, ..., R₁) traversant m autoclaves, (ce sont en général, mais pas obligatoirement, les m premiers),
a2) la suspension traverse d'abord la série d'autoclaves (A₁, ..., Aₖ₋₁, Aₖ, Aₖ₊₁, ..., Aₙ), la durée de son parcours et la température atteinte étant définies de telle sorte qu'à la sortie du dernier autoclave (Aₙ), l'attaque du minerai est pratiquement achevée;
a3) la suspension traverse ensuite la série de détendeurs (D₁ ..., Dᵢ₋₁, Dᵢ, Dᵢ₊₁, ..., Dₘ), la vapeur Vᵢ issue de chaque détendeur Dᵢ alimentant le réchauffeur (Rₖ) traversant l'autoclave (Aₖ),
a4) la suspension est enfin dirigée vers le poste de dilution (C) et l'atelier de décantation (F);
ledit procédé étant caractérisé en ce qu'en au moins un endroit de la chaîne desdits détendeurs (D₁ ..., Dᵢ₋₁, Dᵢ, Dᵢ₊₁, ..., Dₘ), on dilue la suspension (Sᵢ) entrant dans un détendeur (Dᵢ₊₁) avec de l'eau issue de la condensation de la vapeur provenant d'un ou plusieurs détendeurs amonts (D1, ..., Dᵢ).

Ledit "au moins un endroit" de la chaîne des détendeurs est de préférence le détendeur concerné par la précipitation massive des carbonates de sodium ou une partie de la canalisation dans laquelle circule la suspension arrivant dans ledit détendeur, à proximité dudit détendeur. L'eau de dilution est donc amenée directement dans le détendeur concerné et/ou dans la tubulure de circulation de la suspension en amont du détendeur.

L'expression "entrant dans un détendeur" signifie que la dilution peut se faire soit directement dans le détendeur avec une canalisation séparée débouchant dans le détendeur et apportant l'eau nécessaire à la dilution soit par un piquage effectué sur la canalisation dans laquelle circule la suspension en amont du détendeur. Dans ce cas, le piquage est situé à proximité du détendeur, de telle sorte qu'il existe une perte de charge significative entre cet endroit et la sortie du détendeur directement en amont, correspondant par exemple à au moins 90% de la perte de charge totale entre les deux détendeurs.

Soit (Dᵢ) le détendeur concerné par les précipitations intempestives. D'après l'invention, on dilue la suspension (Sᵢ) - qui est recueillie dans le détendeur (Dᵢ) ou la suspension (Sᵢ₋₁) qui circule dans la tubulure (Tᵢ₋₁) pour aboutir dans le détendeur (Dᵢ) - avec de l'eau provenant d'un ou plusieurs condensats provenant des détendeurs amonts. Cette eau est amenée par une canalisation séparée (Gᵢ) débouchant soit directement dans le détendeur (Dᵢ) qui recueille la suspension (Sᵢ) , soit dans la tubulure (Tᵢ₋₁) qui conduit la suspension (Sᵢ₋₁) dans le détendeur (Dᵢ), le piquage étant situé à proximité du détendeur (Dᵢ). Ces deux possibilités de dilution peuvent également être utilisées simultanément.

La demanderesse a pensé qu'au lieu de chercher à éliminer à tout prix les carbonates, du moins à diminuer sensiblement leur concentration par les moyens onéreux de l'art antérieur, il pouvait suffire d'empêcher la précipitation des carbonates aux endroits sensibles, c'est-à-dire au niveau des tubulures de sortie des détendeurs. Un tel procédé permet de travailler avec une proportion pondérale exprimée par le rapport (Na₂O carbonatée) / (Na₂O caustique + Na₂O carbonatée) supérieure à environ 14%. Cette teneur élevée est une teneur d'équilibre: une évacuation des carbonates, suffisante pour éviter leur accumulation, peut en effet être assurée au cours l'extraction des résidus solides. Elle est certes un peu pénalisante (notamment en ce qui concerne la productivité) mais non rédhibitoire pour la bonne marche du procédé Bayer, à condition que l'on puisse maîtriser la précipitation intempestive du carbonate de sodium et éventuellement d'autres sels, notamment ceux à base de soufre, fluor, phosphore, arsenic et/ou vanadium, tels les vanadates, fluoro-arsenio-vanadates, etc ...

On sait, par exemple par FR 1 386 328 (PECHINEY) ou FR 1 523 304, que la solubilité des carbonates diminue avec la concentration caustique de la liqueur. Il n'est donc pas étonnant que la dilution permet d'éviter la précipitation des carbonates. Toutefois, l'ajout d'eau dans le circuit Bayer n'est pas une opération particulièrement souhaitée pour des raisons économiques car cet apport dégrade obligatoirement le bilan énergétique: il faut soit consommer plus d'énergie pour faire évaporer l'eau ainsi introduite, soit, si on prélève l'eau dans le circuit même, admettre de travailler avec une quantité d'eau de lavage des boues beaucoup plus faible (ce qui a pour conséquence d'augmenter les pertes en soude). La solution selon l'invention va d'ailleurs à l'encontre des solutions de l'art antérieur qui ont toutes choisi la voie opposée: concentrer la liqueur en un endroit précis du circuit Bayer, choisi pour y obtenir une précipitation contrôlée des impuretés.

De plus l'apport d'eau en un tel endroit présente un certain risque puisqu'il constitue en quelque sorte une dilution prématurée, qui anticipe la dilution prévue avant la décantation et risque de provoquer une rétrogradation, c'est-à-dire une précipitation prématurée de trihydrate dans les bdcs de décantation. En fait, les essais effectués par la demanderesse montrent que, de façon surprenante, les risques de rétrogradation ne sont pas significativement plus élevés lorsque l'on pratique une dilution limitée dans un détendeur.

L'invention consiste donc à diluer la suspension pour éviter la précipitation des carbonates: on dilue la suspension (Sᵢ₋₁) entrant dans le détendeur (Dᵢ), ou la suspension (Sᵢ) recueillie dans le détendeur (Dᵢ) avec de l'eau issue de la condensation de la vapeur provenant d'un ou plusieurs détendeurs amonts (D1, ..., Dᵢ₋₁). De préférence, on utilise l'eau issue de la condensation de la vapeur (Vᵢ₋₂) provenant du détendeur amont (Dᵢ₋₂).
Dans un mode préféré de l'invention, on utilise le système de captation des eaux provenant de la condensation de la vapeur issue des détendeurs et traversant les réchauffeurs installés dans les autoclaves. Ces eaux, appelées eaux de distillation sodiques, sont recueillies dans des pots de purge, un pot de purge (Pₖ) recueillant d'une part les eaux des pots de purge amonts (Pₘ, ... Pₖ₊₁) et d'autre part le condensat (Eᵢ) de la vapeur (Vᵢ) issue du détendeur (Dᵢ).

De préférence, l'eau destinée à diluer la suspension (Sᵢ) recueillie dans le détendeur (Dᵢ) et/ou la suspension (Sᵢ₋₁) entrant dans le détendeur (Dᵢ) est prélevée en sortie du pot de purge (Pₖ₊₂). Elle est conduite par l'intermédiaire d'une canalisation (Gᵢ) soit directement dans le détendeur (Dᵢ) (conduit gᵢₐ), soit dans la canalisation (Tᵢ₋₁) où circule la suspension (Sᵢ₋₁) en amont du détendeur (Dᵢ) (conduit g_{ib}).

De la sorte, les écarts de température entre la suspension et l'eau destinée à la diluer sont minimes, ce qui favorise le maintien des carbonates dans un état dissous stable. Le bilan "eau" est peu affecté: certes, moins d'eau sort du circuit des pots de purge (eau distillée sodique) mais l'eau est prélevée dans le circuit même et réintroduite assez rapidement, au niveau d'un détendeur aval, anticipant en partie la dilution effectuée en aval du dernier détendeur (poste C) et destinée à donner à la suspension la concentration caustique visée à l'entrée du premier décanteur (atelier F). Cela diminue donc la consommation d'eau au poste de dilution (C), l'eau ainsi épargnée pouvant par exemple être utilisée pour compenser l'apport moindre en eau distillée sodique à l'eau de lavage des boues. De plus, cela diminue la consommation de soude puisque la soude entraînée par la vapeur de détente est évacuée en moins grande quantité avec les condensats utilisés pour le lavage des boues.

On préfère diluer avec le condensat du deuxième détendeur amont, parce que le niveau de pression régnant dans le pot qui recueille le condensat du détendeur directement en amont est à peu près égal à celui qui règne dans le détendeur concerné, de sorte que l'apport d'eau provenant du pot qui recueille le condensat du détendeur directement en amont devrait être aidé par l'emploi d'une pompe supplémentaire.

D'autre part, le fait de diluer avec des eaux de distillation sodiques qui sont des eaux chaudes recyclées du procédé, permet d'améliorer le rendement thermique par rapport à une dilution qui s'effectuerait avec de l'eau dont le réchauffage spécifique demanderait une dépense d'énergie supplémentaire

Comme le phénomène de précipitation massive des carbonates se produit dans un domaine de température étroit, un seul détendeur devrait en principe être concerné. Toutefois, les variations normales des paramètres de conduite des installations industrielles, les variations de teneur en carbonates de la bauxite traitée, voire d'éventuelles modifications fréquentes imposées dans l'approvisionnement des bauxites, enfin la possibilité de précipitation d'autres sels à des températures différentes, susceptibles de concerner d'autres détendeurs, tout ceci pousse à prévoir des possibilités de dilution de la suspension aussi nombreuses que possible, le mieux étant de prévoir une dilution à l'entrée de chaque détendeur. Cette dilution s'effectue de préférence avec le condensat du deuxième détendeur amont.

De plus, le fait de recycler les eaux de distillation sodiques en plusieurs endroits permet de minimiser la consommation d'énergie. En effet, en recyclant lesdites eaux de distillation sodiques qui se trouvent à une température proche de celle de la suspension à diluer, on agit sur un milieu qui est proche de l'état de réversibilité thermodynamique puisqu'on évite des gros écarts de températures entre les fluides en présence. Plus le nombre de points de dilution est élevé, plus le phénomène s'approche de la réversibilité parfaite et plus la consommation énergétique est faible. Ainsi, on injecte de préférence la quantité d'eau nécessaire dans un nombre maximal de détendeurs.

De préférence donc, chaque tubulure de sortie d'un pot de purge (Pₖ₊₂) est équipée d'une dérivation (Gᵢ) par laquelle une partie de l'eau ainsi prélevée peut être utilisée pour diluer la suspension (Sᵢ) recueillie dans le détendeur (Dᵢ) ou la suspension (Sᵢ₋₁) entrant dans le détendeur (Dᵢ). De plus, à l'aide d'une vanne équipant chaque dérivation (Gᵢ), on peut contrôler le flux de l'eau de dilution: il en faut suffisamment pour empêcher la précipitation des carbonates mais pas trop pour éviter les pertes énergétiques superflues et une éventuelle rétrogradation.

Un nombre important de canalisations (Gi) est d'autant plus souhaitable que plusieurs autres sels (à base de soufre, fluor, phosphore, arsenic et/ou vanadium, tels les de vanadates, fluoro-arsenio-vanadates, etc ...) sont susceptibles de précipiter de manière brutale et intempestive dans le circuit des détendeurs, mais chacun dans un domaine de température distinct correspondant à un détendeur particulier, pouvant être différent de celui concerné par la précipitation des carbonates. Il est ainsi plus aisé de contrôler séparément le risque de précipitation de chacun de ces sels.

Enfin, sur le plan économique, l'installation d'une ou plusieurs canalisations supplémentaires se traduit par un surcoût négligeable en terme d'investissement, incomparablement plus faible que les équipements envisagés dans l'art antérieur (chaîne de précipitation des carbonates de baryum et recyclage de l'aluminate de baryum; atelier de décalcitation des bauxites).

La quantité d'eau utilisée pour diluer la suspension afin d'éviter une précipitation massive des carbonates et autres sels peut être déterminée précisément à partir des courbes de solubilité de ces sels, en particulier de celle des carbonates.

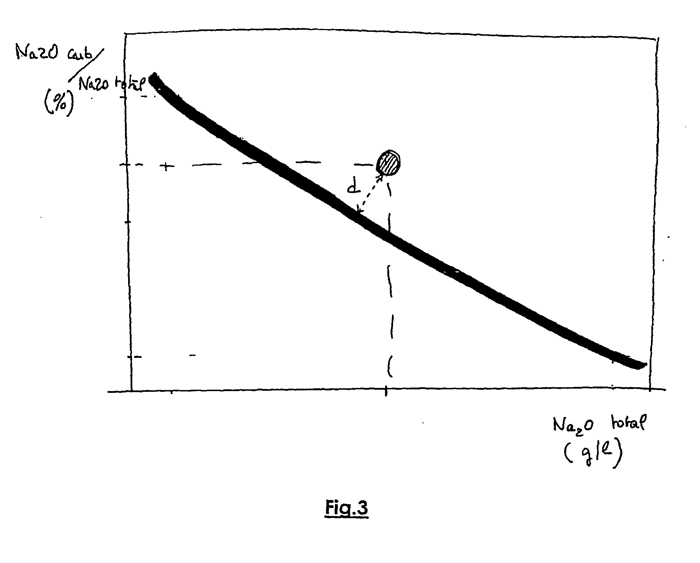

La figure 3 illustre comme exemple un courbe schématique qui donne la concentration limite à une température donnée des carbonates exprimés en terme de soude carbonatée (Na2O carbonatée) évoluant en fonction de la concentration caustique de la liqueur. La quantité d'eau nécessaire pour la dilution est sensiblement proportionnelle à la distance existant entre ladite courbe et le point de fonctionnement à l'endroit considéré du circuit de détente.

On peut ainsi, pour toute canalisation Gᵢ, en agissant sur la vanne installée sur ladite canalisation, introduire de l'eau permettant de diluer la suspension avec un débit déterminé en fonction de la température et de la concentration en carbonates de la suspension arrivant à l'entrée du détendeur considéré.

### MODE DE REALISATION PARTICULIER DE L'INVENTION (Installation globale illustrée en figure 1 avec n=19 et m=12; mise en oeuvre de la dilution selon l'invention avec i=9 et k=4 )

Dans cet exemple, la bauxite à diaspore à traiter est une bauxite chinoise contenant 4,3 % de carbonates de calcium.

L'atelier d'attaque continue comporte 19 autoclaves et 12 détendeurs. La suspension, sortant du dernier autoclave est portée à 265°C sous 50 bars.

Sans la dérivation selon l'invention, on constate un entartrage rapide du détendeur D9. Le circuit a en effet tendance à se boucher après quelques jours de fonctionnement à un niveau du circuit où la température de la solution est voisine de 150°C.

En absence de dilution, la suspension S8 a, à l'entrée dans le détendeur D9, une concentration caustique de 260 g/l exprimée en Na2O total et une teneur en carbonates de 14% exprimée en terme de Na2O carb / Na2O total. Le point de fonctionnement correspondant se trouve éloigné de la courbe de solubilisation de la figure 3 et la distance d de ce point à la courbe de solubilisation indique qu'il faudrait diluer la suspension S8 circulant avec un débit de 375 m3/h à l'entrée du détendeur D9 avec un débit de 10 m3/h pour éviter la précipitation des carbonates à cet endroit, notamment à la sortie du détendeur D9.

Si on dilue avec de l'eau tirée de l'extérieur, portée à une température de 150 °C. On empêche la précipitation mais on constate un surcoût en énergie de l'ordre de 133MJ/t d'alumine produite.

Si par contre, on prélève une partie de l'eau en sortie du pot de purge P6, lui-même alimenté par l'eau issue des pots de purge amont P12 à P7 et le condensat de la vapeur V7 sortie du détendeur amont D7 pour traverser le réchauffeur R6 de l'autoclave A6. On injecte cette eau par l'intermédiaire de la canalisation G9, à raison de 10 m³/h, dans la suspension S8 circulant dans la tubulure T8, le piquage du conduit g_{9b} dans la tubulure T8 se trouvant à proximité (environ 100 mm) de l'entrée dans le détendeur D9.

On constate alors que les tubulures de sortie du détendeur D9 ne font plus l'objet d'un entartrage massif.

### AVANTAGES

- possibilité d'éviter la précipitation d'autres sels
- particulièrement intéressant pour les bauxites à diaspores comportant déjà des carbonates, ce procédé peut être utilisé pour d'autres types de bauxites, sachant que la tendance générale dans le procédé Bayer est d'augmenter la concentration caustique de la liqueur d'aluminate dans le but d'améliorer la productivité et que la conduite du procédé Bayer va se heurter de plus en plus à l'avenir à des problèmes de précipitation intempestives des carbonates (vanadates et autres sels précédemment décrits) résultant de leur moindre solubilité dans de tels milieux.

## Revendications

1. Procédé de production d'alumine à partir de bauxites à monohydrate d'alumine de type diaspore ou boehmite susceptibles de contenir plus de 1,5% en poids de carbonates de calcium présentant les étapes générales d'un procédé Bayer suivantes:
a) attaque du minerai à l'aide d'une liqueur d'aluminate ayant une concentration en soude supérieure à 200 g Na2O /litre à une température supérieure à 220°C
b) dilution de la suspension d'aluminate ainsi obtenue,
c) séparation des résidus insolubles par décantation et/ou filtrage,
d) décomposition de la liqueur par ensemencement avec des particules de trihydroxyde d'aluminium dans le but de provoquer la précipitation de l'alumine en solution, sous forme de trihydrate d'alumine;
e) recyclage de la liqueur d'aluminate de sodium appauvrie vers l'étape de l'attaque de la bauxite après lui avoir redonné une concentration en hydroxyde de sodium appropriée
l'étape d'attaque du minerai dudit procédé étant effectuée de la façon suivante:
a1) une suspension, réalisée avec le minerai de bauxite broyé et la liqueur d'aluminate concentrée, est conduite dans une installation comportant une série de n autoclaves (A₁, ..., Aₖ₋₁, Aₖ, Aₖ₊₁, ..., Aₙ) et une série de m, m étant inférieur à n, détendeurs (D₁ ..., Dᵢ₋₁, Dᵢ, Dᵢ₊₁, ..., Dₘ) alimentant en vapeur m réchauffeurs tubulaires (Rₘ, ..., Rₖ₊₁, Rₖ, Rₖ₋₁, ..., R₁) traversant m autoclaves:
a2) la suspension traverse d'abord la série d'autoclaves (A₁, ..., Aₖ₋₁, Aₖ, Aₖ₊₁, ..., Aₙ), la durée de son parcours étant définie de telle sorte qu'à la sortie du dernier autoclave Aₙ, l'attaque du minerai est pratiquement achevée;
a3) la suspension traverse ensuite la série de détendeurs (D₁ ..., Dᵢ₋₁, Dᵢ, Dᵢ₊₁, ..., Dₘ), la vapeur (Vᵢ) issue de chaque détendeur (Dᵢ) alimentant le réchauffeur (Rₖ) traversant l'autoclave (Aₖ),
a4) la suspension est ensuite dirigée vers le poste de dilution (C) et l'atelier de décantation (F);
ledit procédé étant **caractérisé en ce qu'**au moins un endroit de la chaîne desdits détendeurs (D₁ ..., Dᵢ₋₁, Dᵢ, Dᵢ₊₁, ..., Dₘ), on dilue la suspension (Sᵢ₋₁) entrant dans un détendeur (Dᵢ) avec de l'eau issue de la condensation de la vapeur provenant d'un ou plusieurs détendeurs amonts (D1, ..., Dᵢ₋₁).

2. Procédé selon la revendication 1 dans lequel on dilue soit la suspension (Sᵢ₋₁) entrant dans un détendeur (Dᵢ), soit la suspension (Sᵢ) recueillie dans le détendeur (Dᵢ), soit encore les deux, avec de l'eau issue de la condensation de la vapeur provenant du détendeur amont (Dᵢ₋₂)

3. Procédé selon la revendication 2 dans lequel l'eau de dilution est prélevée en sortie du pot de purge (Pₖ₊₂) qui recueille le condensat (Eᵢ₋₂) de la vapeur (Vᵢ₋₂) issue du détendeur (Dᵢ₋₂) et est introduite dans la suspension (Sᵢ) à l'aide d'une canalisation (Gᵢ) qui relie la canalisation de sortie du pot de purge (Pₖ₊₂) au détendeur (Di).

4. Procédé selon la revendication 2 dans lequel l'eau de dilution est prélevée en sortie du pot de purge (Pₖ₊₂) qui recueille le condensat (Eᵢ₋₂) de la vapeur (Vᵢ₋₂) issue du détendeur (Dᵢ₋₂) et est introduite dans la suspension (Sᵢ₋₁) à l'aide d'une canalisation (Gᵢ) qui relie la canalisation de sortie du pot de purge (Pₖ₊₂) à la canalisation (Tᵢ₋₁) dans laquelle circule la suspension (Sᵢ₋₁), par un piquage situé à proximité du détendeur (Dᵢ).

5. Procédé selon la revendication 3 ou 4 dans lequel le pot de purge (Pₖ₊₂) recueille également les eaux des pots de purge amonts (Pₖ₊₃, ..., Pₘ).

6. Procédé selon l'une quelconque des revendications 3 à 5 dans lequel une canalisation (Gᵢ) relie la canalisation de sortie de chaque pot de purge (Pₖ₊₂) à chaque détendeur (Dᵢ).

7. Procédé selon l'une quelconque des revendications 1 à 6 dans lequel le débit de l'eau de dilution est déterminé à l'aide d'une courbe de solubilisation préalablement établie.

8. Procédé selon la revendication 7 dans lequel le débit de l'eau de dilution est contrôlé à l'aide d'une vanne installée sur la canalisation (Gᵢ).

## Patentansprüche

1. Verfahren zur Produktion von Aluminiumoxid aus Aluminiummonohydroxid-Bauxiten vom Typ Diaspor oder Böhmit, die mehr als 1,5 Gew.-% Calciumcarbonate enthalten können, welches Verfahren folgende allgemeinen Schritte eines Bayer-Verfahrens aufweist:
a) Aufschließen des Minerals mit einer Aluminattauge mit einer Natriumoxidkonzentration von mehr als 200 g Na2O/Liter bei einer Temperatur oberhalb 220°C,
b) Verdünnen der so erhaltenen Suspension,
c) Abtrennen des unlöslichen Rückstands durch Dekantieren und/oder Filtrieren,
d) Zersetzen der Lauge durch Impfen mit Aluminiumtrihydroxidpartikeln, um die Ausfällung des gelösten Aluminiumhydroxids in Form von Aluminiumtrihydroxid zu veranlassen,
e) Rückführen der dadurch verarmten Natriumaluminatlauge zum Bauxitaufschlusssystem, nachdem ihr wieder eine angemessene Natriumhydroxidkonzentration gegeben wurde,
wobei der Verfahrensschritt zum Aufschließen des Minerals wie folgt durchgeführt wird:
a1) eine mit dem gemahlenen Bauxitmineral und der konzentrierten Aluminatlauge hergestellte Suspension wird in eine Anlage geführt, bestehend aus einer Reihe von n Autoklaven (A₁, ..., Aₖ₋₁, Aₖ, Aₖ₊₁, ..., Aₙ) und einer Reihe von m, mit m < n, Druckminderern (D₁ ..., Dᵢ₋₁, Dᵢ, Dᵢ₊₁, ..., Dₘ), die m Rohrvorwämier (Rₘ, ..., Rₖ₊₁, Rₖ, Rₖ₋₁, ..., R₁), weiche durch m Autoklaven geführt sind, mit Dampf versorgen;
a2) die Suspension durchläuft zunächst die Reihe von Autoklaven (A₁, ..., Aₖ₋₁, Aₖ, Aₖ₊₁, ..., Aₙ), wobei die Durchflussdauer so festgelegt ist, dass beim Austritt aus dem letzten Autoklaven An der Aufschluss des Minerals praktisch abgeschlossen ist;
a3) die Suspension durchläuft danach die Reihe von Druckminderern (D₁ ..., Dᵢ₋₁, Dᵢ, Dᵢ₊₁, ..., Dₘ), wobei der aus jedem Druckminderer (Dᵢ) kommende Dampf (Vᵢ) dem Vorwärmer (Rₖ) zugeführt wird, der durch den Autoklaven (Aₖ) geführt ist;
a4) die Suspension wird anschließend zur Verdünnungsstation (C) und zur Dekantieranlage (F) geführt;
wobei das Verfahren **dadurch gekennzeichnet ist, dass** man an mindestens einer Stelle der Reihe von Druckminderern (D₁ ..., Dᵢ₋₁, Dᵢ, Dᵢ₊₁, ..., Dₘ) die in einen Druckminderer (Dᵢ) eintretende Suspension (Sᵢ₋₁) mit Wasser aus der Kondensation des Dampfes verdünnt, der aus einem oder mehreren vorgeschalteten Druckminderem (D₁, ..., Dᵢ₋₁) kommt.

2. Verfahren nach Anspruch 1, bei dem man entweder die in einen Druckminderer (Dᵢ) eintretende Suspension (Sᵢ₋₁) oder die in dem Druckminderer (Dᵢ) aufgefangene Suspension (Sᵢ) oder auch beide mit Wasser aus der Kondensation des Dampfes verdünnt, der aus dem vorgeschalteten Druckminderer (Dᵢ₋₂) kommt.

3. Verfahren nach Anspruch 2, bei dem das Verdünnungswasser beim Austritt aus dem Kondensattopf (Pₖ₊₂), welcher das Kondensat (Eᵢ₋₂) des Dampfes (Vᵢ₋₂) aus dem Druckminderer (Dᵢ₋₂) auffängt, entnommen und über eine Rohrleitung (Gᵢ), welche den Auslauf des Kondensattopfes (Pₖ₊₂) mit dem Druckminderer (Dᵢ) verbindet, in die Suspension (Sᵢ) eingeleitet wird.

4. Verfahren nach Anspruch 2, bei dem das Verdünnungswasser beim Austritt aus dem Kondensattopf (Pₖ₊₂), welcher das Kondensat (Eᵢ₋₂) des Dampfes (Vᵢ₋₂) aus dem Druckminderer (Dᵢ₋₂) auffängt, entnommen und über eine Rohrleitung (Gᵢ), welche den Auslauf des Kondensattopfes (Pₖ₊₂) mit der Rohrleitung (Tᵢ₋₁), in der die Suspension (Sᵢ₋₁) fließt, verbindet, über einen in der Nähe des Druckminderers (Dᵢ) liegenden Rohrstutzen in die Suspension (Sᵢ₋₁) eingeleitet wird.

5. Verfahren nach Anspruch 3 oder 4, bei dem der Kondensattopf (Pₖ₊₂) auch das Wasser der vorgeschalteten Kondensattöpfe (Pₖ₊₃, ..., Pₘ) auffängt.

6. Verfahren nach irgendeinem der Ansprüche 3 bis 5, bei dem eine Rohrleitung (Gᵢ) den Ablauf jedes Kondensattopfes (Pₖ₊₂) mit jedem Druckminderer (Dᵢ) verbindet.

7. Verfahren nach irgendeinem der Ansprüche 1 bis 6, bei dem die Menge des Verdünnungswassers mit einer vorher erstellten Solubilisierungskurve bestimmt wird.

8. Verfahren nach Anspruch 7, bei dem die Menge des Verdünnungswassers mit einem in der Rohrleitung (Gᵢ) montierten Ventil gesteuert wird.

## Claims

1. Alumina production process from bauxites containing alumina monohydrate of the diaspore or boehmite type with more than 1.5% by weight of calcium carbonate with the following general steps of a Bayer process:
a) digestion of the ore at a temperature of more than 220°C using an aluminate liquor with a soda concentration of more than 200 g of Na2O/litre;
b) dilution of the aluminate slurry thus obtained,
c) separation of the insoluble residues by settling and filtering,
d) crystallisation of the liquor by seeding with aluminium trihydroxide particles in order to cause precipitation of the alumina in solution in the form of alumina trihydrate;
e) recycling of the spent sodium aluminate liquor to the bauxite digestion step after having restored an appropriate concentration of the sodium hydroxide,
the ore digestion step in the said process being carried out as follows:
a1) a slurry, made with ground bauxite ore and concentrated alumina liquor, is transferred into an installation comprising a series of n digesters (A₁, ..., Aₖ₋₁, Aₖ, Aₖ₊₁, ..., Aₙ) and a series of m flash tanks (D₁, ..., Dᵢ₋₁, Dᵢ, Dᵢ₊₁, ..., Dₘ), where m is less than n, supplying tubular heaters (Rₘ, ..., Rₖ₊₁, Rₖ, Rₖ₋₁..., R₁) with steam passing through m digesters.
a2) the slurry then passes firstly through the series of digesters (A₁, ..., Aₖ₋₁, Aₖ, Aₖ₊₁, ..., Aₙ), the duration of its path being defined such that ore digestion is practically complete at the exit from the last digester An;
a3) the slurry then passes through the series of flash tanks (D₁, ..., Dᵢ₋₁, Dᵢ, Dᵢ₊₁, ..., Dₘ), the steam (Vi) output from each flash tank (Dᵢ) supplying the heater (Rₖ) passing through the digester (Aₖ),
a4) the slurry is finally directed towards the dilution station (C) and the settlement workshop (F);
the said process being **characterised in that** the slurry (Sᵢ₋₁) entering a flash tank (Dᵢ) is diluted at at least one location along the line of the said flash tanks (D₁, ..., Dᵢ₋₁, Dᵢ, Dᵢ₊₁, ..., Dₘ), using water derived from condensation of steam originating from one or several upstream flash tanks (Dl, ..., Dᵢ₊₁).

2. Process according to claim 1, in which the slurry (Sᵢ₋₁) entering a flash tank (Dᵢ) or the slurry (Sᵢ) collected in the flash tank (Dᵢ), or both, is (are) diluted, using water derived from condensation of steam originating from the upstream flash tank (Dᵢ₋₂).

3. Process according to claim 2, in which dilution water is drawn off at the output from the purge pot (Pₖ₊₂) that collects the condensate (Eᵢ₋₂) from the steam (Vᵢ₋₂) derived from the flash tank (Dᵢ₋₂) and is inserted in the slurry (Sᵢ) using a pipe (Gᵢ) that connects the output pipe from the purge pot (Pₖ₊₂) to the flash tank (Dᵢ).

4. Process according to claim 2, in which dilution water is drawn off at the output from the purge pot (Pₖ₊₂) that collects the condensate (Eᵢ₋₂) from the steam (Vᵢ₋₂) derived from the flash tank (Dᵢ₋₂) and is inserted in the slurry (Sᵢ₋₁) using a pipe (Gᵢ) that connects the output pipe from the purge pot (Pₖ₊₂) to the pipe (Tᵢ₋₁) through which the slurry (Sᵢ₋₁) circulates, through a branch connection located close to the flash tank (Dᵢ).

5. Process according to either claim 3 or 4, in which the purge pot (Pₖ₊₂) also collects water from the upstream purge pots (Pₖ₊₃, ...,Pₘ).

6. Process according to any one of claims 3 to 5, in which a pipe (Gᵢ) connects the output pipe from each purge pot (Pₖ₊₂) to each flash tank (Dᵢ).

7. Process according to any one of claims 1 to 6, in which the dilution water flow is determined using a solubilisation curve defined in advance.

8. Process according to claim 7, in which the dilution water flow is controlled using a valve installed on the pipe (Gᵢ).
